# EUROPEAN PATENT SPECIFICATION

(11) **EP 1 234 497 B1**
(45) Date of publication and mention of the grant of the patent: **22.12.2004**
(21) Application number: 02075594.8
(22) Date of filing: 13.02.2002
(51) Int. Cl.: A01K 9/00, A01K 5/015, A01K 7/06, A01K 7/00

(54) **An apparatus for feeding and/or watering animals**
Futter- und/oder Tränkvorrichtung für Tiere
Dispositif pour nourrir et/ou abreuver des animaux

(30) Priority: 22.02.2001 NL 1017431
(43) Date of publication of application: 28.08.2002
(73) Proprietor: Lely Enterprises AG, 6300 ZUG (CH)
(72) Inventor: van Lenteren, Adriaan Coert, 3155 RH Maasland (NL)
(74) Representative: Corten, Maurice Jean F.M.

(56) References cited:
- WO-A-85/02323
- DE-U- 29 717 387
- FR-A- 2 102 830
- FR-A- 2 796 807
- GB-A- 1 237 883
- GB-A- 2 267 549
- US-A- 3 524 432
- NEDAP VC: "Kalf-Code" , KALF-CODE, XX, XX, PAGE(S) COMPLETE04 XP002103995 * the whole document *

## Description

The invention relates to an apparatus for feeding and/or watering animals according to the preamble of claim 1.

Such an apparatus is known from DE-U-29717387.

The invention aims at improving such an apparatus. According to the invention this is achieved by the measures in the characterizing part of claim 1. The preventing device ensures that the use of the supply device can be controlled.

The invention will now be explained in further detail with reference to the accompanying figures.
Figure 1 is a side view of an apparatus according to the invention;
Figure 2 is a view of the apparatus according to the arrows II - II in Figure 2, and
Figure 3 shows a detail of the apparatus in two different positions.

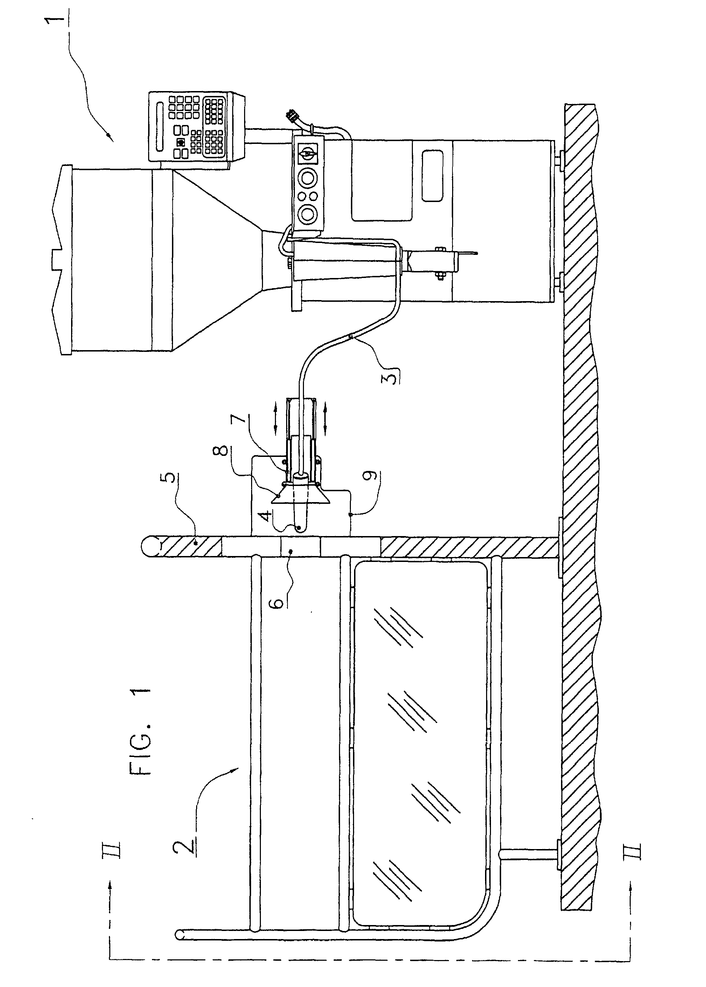

Figure 1 is a side view of an apparatus according to the invention. A feeding unit 1 known per se comprises a reservoir for fodder and/or drink, a metering device and a programmable control unit such as a computer for possibly mixing and metering the fodder and/or the drink. A feeding parlour 2 is provided with gates for positioning an animal wishing to eat or drink. The feeding parlour 2 is possibly provided with animal identification means for recognising an animal that visits the feeding parlour for taking fodder or drink. Said identification means are able to co-operate with the computer in the feeding unit 1, so that an individual supply of feed is possible. By feed is each time also meant drink or a mixture of fodder and drink. The apparatus is in particular suitable for feeding young animals, such as calves, with principally liquid food.

In the embodiment shown in Figure 1 the feeding unit 1 is connected with the feeding parlour 2 via a supply line 3. The supply line for supplying feed debouches near the feeding parlour 2 into a teat-like supply device 4 that is adapted to supply feed to an animal that sucks or licks at it. The supply device 4 is fixedly fastened in relation to the feeding parlour 2, e.g. to a part of the fencing that is adjacent to the feeding parlour 2 in the direction of the feeding unit 1. In the embodiment shown the supply device 4 is disposed behind a wall 5 with an entrance opening 6 for the snout of an animal. The animal can put its snout through the opening 6 in order to reach the supply device 4.

According to the invention the apparatus is further provided with a preventing device 7 which is capable of being activated and deactivated and which, when active, is adapted to prevent an animal from sucking and/or licking at the supply device 4. In Figure 1 the preventing device 7 is designed so as to be substantially cylindrical and movable in relation to the apparatus between a first, deactivated position and a second, activated position, as will be explained hereinafter in further detail. Other designs of the preventing device 7 are possible as well.

The portion 8 of the preventing device 7 that is located closest to the animal serves as pushing-away portion for the snout of the animal and is preferably ring-shaped, sleeve-shaped, conical or cylindrical. The supply device 4 and the preventing device 7 are disposed substantially co-axially and the preventing device 7 is capable of being shifted in axial direction in relation to the supply device 4.

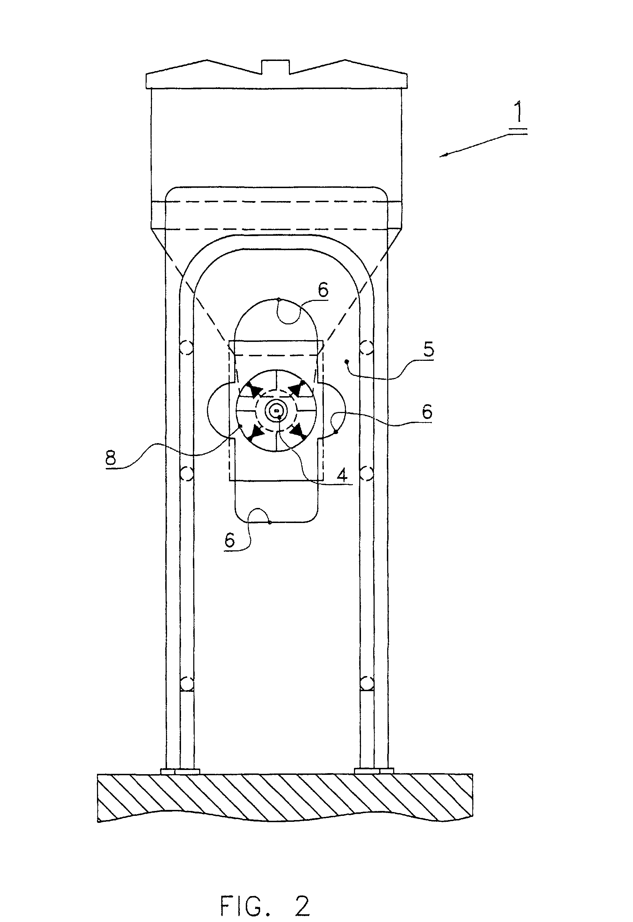

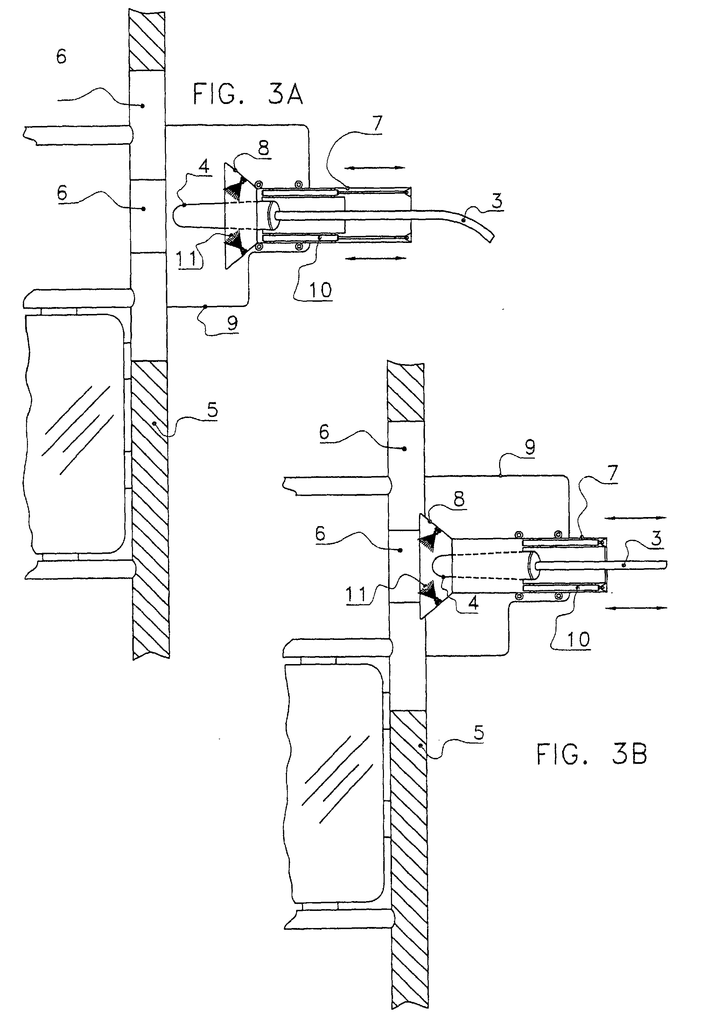

This is further elucidated in the further figures. Figure 2 is a view of the apparatus according to the arrows II - II in Figure 1, and Figure 3 shows the preventing device 7 of the apparatus in two different positions. The brackets 9 serve for fastening to the feeding parlour 2. The opening or recess 6 in the wall 5 may have various shapes, of course.

Figure 3A shows the preventing device 7 in its first, deactivated position. Via the opening 6 in the wall 5 the supply device 4 is freely accessible to the snout of an animal that is going to occupy the feeding parlour 2. In Figure 3B the preventing device 7 is in its second, activated position. By means of control cylinders 10 the pushing-away portion 8 has now been shifted so far in the direction of the animal that its snout can no longer reach the supply device 4. In said second position the preventing device 7 surrounds the supply device 4 for the greater part. Of course, the cylinders 10 are dimensioned such that they are able to push the snout of an animal that is standing in the feeding parlour 2 in rearward direction.

The apparatus is preferably provided with cleaning and/or disinfecting means for the supply device 4. Said cleaning and/or disinfecting means may be disposed at least partially on and/or in the preventing device 7. At least in the second position, in which the supply device 4 is surrounded by the preventing device 7, they are adapted to be activated for cleaning and/or disinfecting the supply device 4.

In a compact embodiment the cleaning and/or disinfecting means are substantially disposed on the inside of the preventing device 7. In this situation the preventing device 7 may at least partially be designed so as to be double-walled in such a manner that water and/or a cleansing agent and/or a disinfectant can be passed between the walls. The preventing device 7 may further be provided on the inside with apertures for supplying water and/or a cleansing agent and/or a disinfectant to the supply device 4.

In the embodiment shown in the figures the pushing-away portion 8 is conical and provided on the inside with means, such as sprayers 11, for supplying water and/or a cleansing agent and/or a disinfectant to the supply device 4.

The pushing-away portion 8 may be adapted to be located substantially against the wall 5 in the second position. In this situation the pushing-away portion 8 closes the opening 6 to such an extent that the animal can no longer reach the supply device 4 with its snout. In another, non-shown embodiment, the pushing-away portion 8 is adapted to close the entrance opening 6 almost completely in the second position.

In a further, non-shown embodiment, the preventing device 7 comprises means for spraying a fluid, such as liquid or air or another gas in the direction of the snout of an animal. The animals finds this unpleasant and will draw back its snout.

The apparatus may be provided with means for giving a warning signal before the preventing device 7 is activated. The animal is thus alerted and can draw back its snout in time.

Instead of the feeding unit 1 with the teat 4 and the supply line 3, there may for example also be provided a salt stick at which an animal can lick.

## Claims

1. An apparatus for feeding and/or watering animals by means of a supply device (4) for fodder and/or drink at which the animals can suck and/or lick, the supply device (4) being fixedly disposed in relation to the apparatus, the apparatus being provided with a preventing device (7) capable of being activated and deactivated, which preventing device (7), when active, is adapted to prevent an animal from sucking and/or licking at the supply device (4), **characterized in that** the preventing device (7) is designed so as to be substantially ring-shaped or cylindrical, and **in that** the supply device (4) and the preventing device (7) are disposed substantially co-axially and the preventing device (7) is capable of being shifted in axial direction in relation to the supply device (4).

2. An apparatus as claimed in claim 1, **characterized in that** the preventing device (7) is disposed so as to be movable in relation to the apparatus between a first, deactivated position and a second, activated position.

3. An apparatus as claimed in claim 2, **characterized in that** the preventing device (7) substantially surrounds the supply device (4) at least in the second position.

4. An apparatus as claimed in any one of claims 1 to 3, **characterized in that** the supply device (4) is substantially designed as a teat.

5. An apparatus as claimed in any one of claims 1 to 4, **characterized in that** the apparatus is provided with cleaning and/or disinfecting means (11) for the supply device (4).

6. An apparatus as claimed in claim 5, **characterized in that** the cleaning and/or disinfecting means (11) for the supply device (4) are disposed at least partially on and/or in the preventing device (7).

7. An apparatus as claimed in any one of claims 5 and 6, **characterized in that** the cleaning and/or disinfecting means (11) are capable of being activated at least in the second position.

8. An apparatus as claimed in any one of claims 6 and 7, **characterized in that** the cleaning and/or disinfecting means (11) are substantially disposed on the inside of the preventing device (7).

9. An apparatus as claimed in any one of claims 5 to 8, **characterized in that** the preventing device (7) is at least partially designed so as to be double-walled in such a manner that water and/or a cleansing agent and/or a disinfectant can be passed between the walls.

10. An apparatus as claimed in any one of claims 5 to 9, **characterized in that** the preventing device (7) is provided on the inside with apertures for supplying water and/or a cleansing agent and/or a disinfectant to the supply device (4).

11. An apparatus as claimed in any one of claims 1 to 10, **characterized in that** the preventing device (7) is provided with a pushing-away portion (8) for the snout of an animal.

12. An apparatus as claimed in claim 11, **characterized in that** the pushing-away portion (8) is designed so as to be ring-shaped, cylindrical or conical.

13. An apparatus as claimed in any one of claims 11 and 12, **characterized in that** the pushing-away portion (8) is provided with means (11) for supplying water and/or a cleansing agent and/or a disinfectant to the supply device (4).

14. An apparatus as claimed in any one of claims 1 to 13, **characterized in that** the supply device (4) and the preventing device (7) are disposed behind a wall (5) with an entrance opening (6) for the snout of an animal.

15. An apparatus as claimed in any one of claims 11 to 13 and claim 14, **characterized in that** the pushing-away portion (8) is adapted to be located substantially against the wall (5) in the second position.

16. An apparatus as claimed in any one of claims 14 and 15, **characterized in that** the pushing-away portion (8) is adapted to close the entrance opening (6) substantially completely in the second position.

17. An apparatus as claimed in any one of claims 1 to 16, **characterized in that** the preventing device (7) comprises means for spraying a fluid in the direction of the snout of an animal.

18. An apparatus as claimed in any one of claims 1 to 17, **characterized in that** the apparatus is provided with means for giving a warning signal before the preventing device (7) is activated.

## Patentansprüche

1. Vorrichtung zum Füttern und/oder Tränken von Tieren mit Hilfe einer Zuführvorrichtung (4) für Futter und/oder Trinkflüssigkeit, an der die Tiere saugen und/oder lecken können, wobei die Zuführvorrichtung (4) in bezug auf die Vorrichtung fest angeordnet ist, wobei die Vorrichtung mit einer Hinderungsvorrichtung (7) versehen ist, die aktiviert und deaktiviert werden kann, wobei die Hinderungsvorrichtung (7) in aktiviertem Zustand geeignet ist, ein Tier am Saugen und/oder Lecken an der Zuführvorrichtung (4) zu hindern,
**dadurch gekennzeichnet, daß** die Hinderungsvorrichtung (7) im wesentlichen ringförmig oder zylindrisch ausgebildet ist, und daß die Zuführvorrichtung (4) und die Hinderungsvorrichtung (7) im wesentlichen koaxial angeordnet sind und die Hinderungsvorrichtung (7) in bezug auf die Zuführvorrichtung (4) in axialer Richtung verschiebbar ist.

2. Vorrichtung nach Anspruch 1,
**dadurch gekennzeichnet, daß** die Hinderungsvorrichtung (7) derart angeordnet ist, daß sie in bezug auf die Vorrichtung zwischen einer ersten deaktivierten Position und einer zweiten aktivierten Position bewegbar ist.

3. Vorrichtung nach Anspruch 2,
**dadurch gekennzeichnet, daß** die Hinderungsvorrichtung (7) zumindest in der zweiten Position die Zuführvorrichtung (4) im wesentlichen umschließt.

4. Vorrichtung nach einem der Ansprüche 1 bis 3,
**dadurch gekennzeichnet, daß** die Zuführvorrichtung (4) im wesentlichen als Zitze ausgebildet ist.

5. Vorrichtung nach einem der Ansprüche 1 bis 4,
**dadurch gekennzeichnet, daß** die Vorrichtung mit Reinigungs- und/oder Desinfektionsvorrichtungen (11) für die Zuführvorrichtung (4) versehen ist.

6. Vorrichtung nach Anspruch 5,
**dadurch gekennzeichnet, daß** die Reinigungs- und/oder Desinfektionsvorrichtungen (11) für die Zuführvorrichtung (4) zumindest teilweise an und/oder in der Hinderungsvorrichtung (7) angeordnet sind.

7. Vorrichtung nach einem der Ansprüche 5 und 6,
**dadurch gekennzeichnet, daß** die Reinigungs- und/oder Desinfektionsvorrichtungen (11) zumindest in der zweiten Position aktivierbar sind.

8. Vorrichtung nach einem der Ansprüche 6 und 7,
**dadurch gekennzeichnet, daß** die Reinigungs- und/oder Desinfektionsvorrichtungen (11) im wesentlichen an der Innenseite der Hinderungsvorrichtung (7) angeordnet sind.

9. Vorrichtung nach einem der Ansprüche 5 bis 8,
**dadurch gekennzeichnet, daß** die Hinderungsvorrichtung (7) zumindest teilweise doppelwandig ausgebildet ist, so daß Wasser und/oder ein Reinigungsmittel und/oder ein Desinfektionsmittel zwischen den Wänden hindurchgeführt werden kann.

10. Vorrichtung nach einem der Ansprüche 5 bis 9,
**dadurch gekennzeichnet, daß** die Hinderungsvorrichtung (7) an der Innenseite mit Öffnungen zum Zuführen von Wasser und/oder einem Reinigungsmittel und/oder einem Desinfektionsmittel zu der Zuführvorrichtung (4) versehen ist.

11. Vorrichtung nach einem der Ansprüche 1 bis 10,
**dadurch gekennzeichnet, daß** die Hinderungsvorrichtung (7) mit einem Wegstoßteil (8) für die Schnauze eines Tieres versehen ist.

12. Vorrichtung nach Anspruch 11,
**dadurch gekennzeichnet, daß** der Wegstoßteil (8) ringförmig, zylindrisch oder konisch ausgebildet ist.

13. Vorrichtung nach einem der Ansprüche 11 und 12,
**dadurch gekennzeichnet, daß** der Wegstoßteil (8) mit Vorrichtungen (11) zum Zuführen von Wasser und/oder einem Reinigungsmittel und/oder einem Desinfektionsmittel zu der Zuführvorrichtung (4) versehen ist.

14. Vorrichtung nach einem der Ansprüche 1 bis 13,
**dadurch gekennzeichnet, daß** die Zuführvorrichtung (4) und die Hinderungsvorrichtung (7) hinter einer Wand (5) mit einer Zugangsöffnung (6) für die Schnauze eines Tieres angeordnet sind.

15. Vorrichtung nach einem der Ansprüche 11 bis 13 und Anspruch 14,
**dadurch gekennzeichnet, daß** der Wegstoßteil (8) geeignet ist, in der zweiten Position im wesentlichen an der Wand (5) positioniert zu werden.

16. Vorrichtung nach einem der Ansprüche 14 und 15,
**dadurch gekennzeichnet, daß** der Wegstoßteil (8) geeignet ist, in der zweiten Position die Zugangsöffnung (6) im wesentlichen vollkommen zu verschließen.

17. Vorrichtung nach einem der Ansprüche 1 bis 16,
**dadurch gekennzeichnet, daß** die Hinderungsvorrichtung (7) eine Vorrichtung zum Sprühen einer Flüssigkeit in Richtung der Schnauze eines Tieres umfaßt.

18. Vorrichtung nach einem der Ansprüche 1 bis 17,
**dadurch gekennzeichnet, daß** die Vorrichtung mit einer Vorrichtung zum Abgeben eines Warnsignals vor Aktivieren der Hinderungsvorrichtung (7) versehen ist.

## Revendications

1. Appareil pour nourrir et/ou abreuver des animaux au moyen d'un dispositif d'alimentation (4) pour du fourrage et/ou une boisson que les animaux peuvent sucer et/ou lécher, le dispositif d'alimentation (4) étant disposé de façon fixe par rapport à l'appareil, l'appareil étant pourvu d'un dispositif préventif (7) capable d'être activé et désactivé, lequel dispositif préventif (7), lorsqu'il est actif, est adapté pour empêcher un animal de sucer et/ou lécher le dispositif d'alimentation (4), **caractérisé en ce que** le dispositif préventif (7) est conçu afin d'être sensiblement de forme annulaire ou cylindrique, et **en ce que** le dispositif d'alimentation (4) et le dispositif préventif (7) sont disposés sensiblement de façon co-axiale et le dispositif préventif (7) est capable d'être déplacé dans une direction axiale par rapport au dispositif d'alimentation (4).

2. Appareil selon la revendication 1, **caractérisé en ce que** le dispositif préventif (7) est disposé afin d'être mobile par rapport à l'appareil entre une première position désactivée et une seconde position activée.

3. Appareil selon la revendication 2, **caractérisé en ce que** le dispositif préventif (7) entoure sensiblement le dispositif d'alimentation (4) au moins dans la seconde position.

4. Appareil selon l'une quelconque des revendications 1 à 3, **caractérisé en ce que** le dispositif d'alimentation (4) est sensiblement conçu comme un trayon.

5. Appareil selon l'une quelconque des revendications 1 à 4, **caractérisé en ce que** l'appareil est pourvu de moyens de nettoyage et/ou de désinfection (11) pour le dispositif d' alimentation (4).

6. Appareil selon la revendication 5, **caractérisé en ce que** les moyens de nettoyage et/ou de désinfection (11) pour le dispositif d'alimentation (4) sont disposés au moins partiellement sur et/ou dans le dispositif préventif (7).

7. Appareil selon l'une quelconque des revendications 5 et 6, **caractérisé en ce que** les moyens de nettoyage et/ou de désinfection (11) sont capables d'être activés au moins dans la seconde position.

8. Appareil selon l'une quelconque des revendications 6 et 7, **caractérisé en ce que** les moyens de nettoyage et/ou de désinfection (11) sont sensiblement disposés sur l'intérieur du dispositif préventif (7).

9. Appareil selon l'une quelconque des revendications 5 à 8, **caractérisé en ce que** le dispositif préventif (7) est au moins partiellement conçu afin d'avoir une double paroi de manière telle que l'eau et/ou un agent nettoyant et/ou un désinfectant peut passer entre les parois.

10. Appareil selon l'une quelconque des revendications 5 à 9, **caractérisé en ce que** le dispositif préventif (7) est pourvu sur l'intérieur d'ouvertures pour fournir de l'eau et/ou un agent nettoyant et/ou un désinfectant au dispositif d'alimentation (4).

11. Appareil selon l'une quelconque des revendications 1 à 10, **caractérisé en ce que** le dispositif préventif (7) est pourvu d'une partie formant repoussoir (8) pour le museau d'un animal.

12. Appareil selon la revendication 11, **caractérisé en ce que** la partie de repoussoir (8) est conçue afin d'être de forme annulaire, cylindrique ou conique.

13. Appareil selon l'une quelconque des revendications 11 et 12, **caractérisé en ce que** la partie formant repoussoir (8) est pourvue de moyens (11) pour fournir de l'eau et/ou un agent nettoyant et/ou un désinfectant au dispositif d'alimentation (4).

14. Appareil selon l'une quelconque des revendications 1 à 13, **caractérisé en ce que** le dispositif d'alimentation (4) et le dispositif préventif (7) sont disposés derrière une paroi (5) avec une ouverture d'entrée (6) pour le museau d'un animal.

15. Appareil selon l'une quelconque des revendications 11 à 13 et selon la revendication 14, **caractérisé en ce que** la partie formant repoussoir (8) est adaptée pour être située sensiblement contre la paroi (5) dans la seconde position.

16. Appareil selon l'une quelconque des revendications 14 et 15, **caractérisé en ce que** la partie formant repoussoir (8) est adaptée pour fermer l'ouverture d'entrée (6) sensiblement complètement dans la seconde position.

17. Appareil selon l'une quelconque des revendications 1 à 16, **caractérisé en ce que** le dispositif préventif (7) comprend des moyens pour vaporiser un fluide dans la direction du museau d'un animal.

18. Appareil selon l'une quelconque des revendications 1 à 17, **caractérisé en ce que** l'appareil est pourvu de moyens pour donner un signal d'avertissement avant que le dispositif préventif (7) ne soit activé.
